# EUROPEAN PATENT SPECIFICATION

(11) **EP 3 827 921 B1**
(45) Date of publication and mention of the grant of the patent: **18.02.2026**
(21) Application number: 19839937.0
(22) Date of filing: 26.07.2019
(51) Int. Cl.: B23K 20/00, B23K 35/00, B23K 20/02, B23K 20/16, B23K 103/08

(54) **METHOD FOR DIFFUSION BONDING NI ALLOYS CONTAINING CARBIDE BY MEANS OF AN NI INTERLAYER**
VERFAHREN ZUM DIFFUSIONSBONDEN VON CARBIDE ENTHALTENDEN NI-LEGIERUNGEN MITTELS EINER NI-ZWISCHENSCHICHT
PROCÉDÉ DE SOUDAGE PAR DIFFUSION D'ALLIAGES DE NI CONTENANT DU CARBURE AU MOYEN D'UNE COUCHE INTERMÉDIAIRE DE NI

(30) Priority: 26.07.2018 JP 2018140228
(43) Date of publication of application: 02.06.2021
(73) Proprietor: IHI Corporation, Koto-ku Tokyo 135-8710 (JP)
(72) Inventor: HOSOYA, Nagisa, Tokyo 135-8710 (JP); HARADA, Rie, Tokyo 135-8710 (JP); KUBUSHIRO, Keiji, Tokyo 135-8710 (JP)
(74) Representative: Marks & Clerk LLP
(86) International application number: PCT/JP2019/029326
(87) International publication number: WO 2020/022464

(56) References cited:
- WO-A1-2018/011934
- JP-A- 2014 161 885
- JP-A- 2015 508 450
- JP-A- H11 114 662
- US-A- 4 973 366
- SCHWARTZ M M: "DIFFUSION WELDING", 1 January 1979, METALS JOINING MANUAL,, PAGE(S) 10-1, XP001341497
- XIONG JIANGTAO ET AL: "Diffusion bonding of nickel-based superalloy GH4099 with pure nickel interlayer", JOURNAL OF MATERIAL SCIENCE, KLUWER ACADEMIC PUBLISHERS, DORDRECHT, vol. 54, no. 8, 18 January 2019 (2019-01-18), pages 6552 - 6564, XP036689309, ISSN: 0022-2461, [retrieved on 20190118], DOI: 10.1007/S10853-018-03274-X
- SAH INJIN ET AL: "The recovery of tensile ductility in diffusion-bonded Ni-base alloys by post-bond heat treatments", MATERIALS AND DESIGN, LONDON, GB, vol. 47, 3 January 2013 (2013-01-03), pages 581 - 589, XP028984323, ISSN: 0261-3069, DOI: 10.1016/J.MATDES.2012.12.061

## Description

### [Technical Field]

The present invention relates to a method of bonding metal members to obtain a metal member joint body.

### [Background Art]

Heat-resistant alloys such as Ni alloys and Fe alloys are used for metal members used in gas turbines and chemical plants that operate at high temperatures. Diffusion bonding, which can ensure high joint strength and sealing properties, may be applied to structural members with joints (see PTL 1).

### [Citation List]

### [Patent Literature]

[PTL 1] Japanese Patent Application Publication No. 2014-161885
[PTL 2] US4973366A discloses solid phase diffusion welding of a nickel base superalloy having nickel as a main component, an insert material for solid phase diffusion welding and method thereof are disclosed which can improve the welding strength, the insert material consists of an alloy containing 5-25% by atomic % of total atomic amount of at least one selected from aluminum, titanium, tantalum and niobium, [100-(total atomic % of aluminum, titanium, tantalum and niobium)x4] % or less by atomic % of total atomic amount of cladded molded body provided with an austenitic stainless steel layer and a ferritic stainless steel layer.

### [Non-Patent Literature]

[NPTL 1] SCHWARTZ M M, DIFFUSION WELDING, METALS JOINING MANUAL,, PAGE(S) 10-1, (19790101), XP001341497 [X] 1,2,5,6 * page 1017, first paragraph * [Y] 4,7 discloses a chapter on diffusion welding.
[NPTL 2]SAH INJIN ET AL, "The recovery of tensile ductility in diffusion-bonded Ni-base alloys by post-bond heat treatments", MATERIALS AND DESIGN, LONDON, GB, (20130103), vol. 47, doi:10.1016/J.MATDES.2012.12.061, ISSN 0261-3069, pages 581 - 589, XP028984323 [Y] 4,7 * the whole document * [A] 1-3,5,6.

### [Summary of Invention]

### [Technical Problem]

It is to be noted that, as the heat-resistant alloy as described above, a carbide-containing Ni alloy is used in order to improve the mechanical strength and the like. Meanwhile, solid phase diffusion bonding may be applied to diffusion bonding of metal members formed of a carbide-containing Ni alloy or carbide-containing Fe alloy.

However, in the case of solid phase diffusion bonding in at least one selected from chromium, cobalt, tungsten, molybdenum and zirconium and the balance being substantially nickel.

[PTL 3] WO2018/011934A1 discloses a method for manufacturing a cladded molded body provided with an austenitic stainless steel layer and a ferritic stainless steel layer.

### [Non-Patent Literature]

[NPTL 1] SCHWARTZ M M, DIFFUSION WELDING, METALS JOINING MANUAL,, PAGE(S) 10-1, (19790101), XP001341497 [X] 1,2,5,6 * page 1017, first paragraph * [Y] 4,7 discloses a chapter on diffusion welding.
[NPTL 2] SAH INJIN ET AL, "The recovery of tensile ductility in diffusion-bonded Ni-base alloys by post-bond heat treatments", MATERIALS AND DESIGN, LONDON, GB, (20130103), vol. 47, doi:10.1016/J.MATDES.2012.12.061, ISSN 0261-3069, pages 581 - 589, XP028984323 [Y] 4,7 * the whole document * [A] 1-3,5,6.

### [Summary of Invention]

### [Technical Problem]

It is to be noted that, as the heat-resistant alloy as described above, a carbide-containing Ni alloy containing a carbide is used in order to improve the mechanical strength and the like. Meanwhile, solid phase diffusion bonding is applied to diffusion bonding of metal members formed of a carbide-containing Ni alloy.

However, in the case of solid phase diffusion bonding in which the bonding surfaces of the metal members formed of a carbide-containing Ni alloy are directly abutted with each other, the presence of carbides along the bonding interface can result in a situation where the bonding interface serves as a crack propagation path. As a result, the mechanical strength of the metal member joint body may decrease.

Therefore, an object of the present invention is to provide a method of bonding metal members and a metal member joint body capable of further improving the mechanical strength.

### [Solution to Problem]

The invention is as defined in claim 1.

The above configuration makes it possible to suppress carbides at the bonding interface between the first metal member and the second metal member, improving the mechanical strength of the metal member joint body.

### [Brief Description of Drawings]

[Fig. 1] Fig. 1 is a flowchart showing a configuration of a method of bonding metal members in an embodiment.
[Fig. 2] Fig. 2 is a diagram showing a configuration of a stacked body in the embodiment.
[Fig. 3] Fig. 3 is a diagram showing a configuration of a metal member joint body in the embodiment.
[Fig. 4] Fig. 4 is a graph showing the results of tensile tests of each specimen in the embodiment.
[Fig. 5] Fig. 5 is a graph showing the creep test results of each specimen in the embodiment.
[Fig. 6] Fig. 6 is a photograph showing the metal structure observation results of the specimen of Comparative Example 1 in the embodiment.
[Fig. 7] Fig. 7 is a photograph showing the metal structure observation results of the specimen of Example 1 in the embodiment.
[Fig. 8] Fig. 8 is a photograph showing the metal structure observation results of the specimen of Example 2 in the embodiment.
[Fig.9] Fig. 9 is a photograph showing the metal structure observation results of the specimen of Comparative Example 2 in the embodiment.

### [Description of Embodiments]

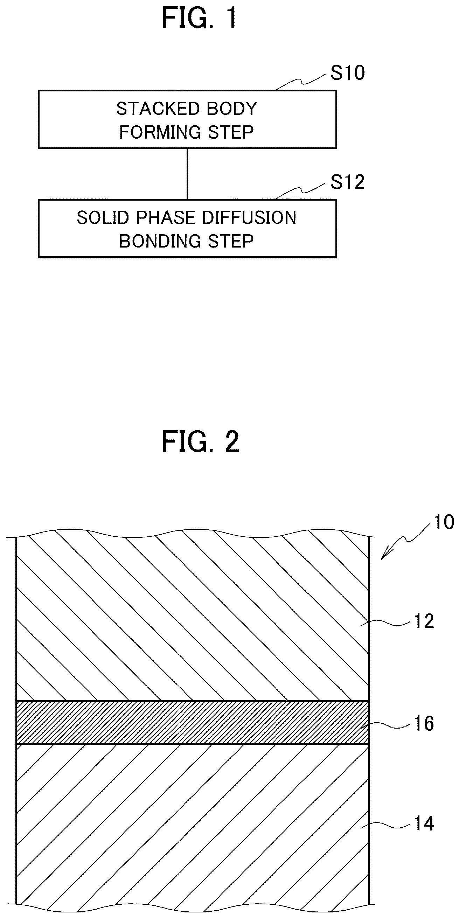

Hereinafter, embodiments of the present invention are described in detail with reference to the drawings. Fig. 1 is a flowchart showing a configuration of a method of bonding metal members. The method of bonding metal members includes a stacked body forming step (S10) and a solid phase diffusion bonding step (S12).

The stacked body forming step (S10) is a step of forming a stacked body by putting an insert material between a first metal member and a second metal member formed of carbide-containing Ni alloys. Fig. 2 is a diagram showing a configuration of the stacked body 10. The stacked body 10 is configured by putting the insert material 16 between the first metal member 12 and the second metal member 14. The first metal member 12 and the second metal member 14 are formed of carbide-containing Ni alloys.

The carbide-containing Ni alloy is an Ni alloy containing carbides, with the main component of the alloy being composed of Ni. The main component of an alloy is the alloying element having the highest content among the alloy components (the same applies hereinafter). The carbide-containing Ni alloy contains C as an alloy component. The content of C can be, for example, 0.01% by mass to 1% by mass. As the carbide-containing Ni alloy, it is possible to use a solid solution strengthened Ni alloy obtained by solid-solving Mo, W, or the like, a precipitation strengthened Ni alloy obtained by precipitating the γ'-phase, or the like.

As the carbide-containing Ni alloy, for example, Haynes 230 alloy can be used. The Haynes 230 alloy is a solid solution strengthened Ni alloy containing carbides. The alloy composition of the Haynes 230 alloy includes, for example, 22% by mass of Cr (chromium), 14% by mass of W (tungsten), 2% by mass of Mo (molybdenum), 3% by mass or less of Fe (iron), 5% by mass or less of Co (cobalt), 0.5% by mass of Mn (manganese), 0.4% by mass of Si (silicon), 0.5% by mass or less of Nb (niobium), 0.3% by mass of Al (aluminum), 0.1% by mass or less of Ti (titanium), 0.1% by mass of C (carbon), 0.02% by mass of La (lanthanum), and 0.015% by mass or less of B (boron), in which the balance is composed of Ni (nickel) and incidental impurities. The carbides contained in the Haynes 230 alloy are Cr carbides, W carbides, and the like. Carbides are precipitated in crystal grains, crystal grain boundaries, and the like.

When the first metal member 12 and the second metal member 14 are formed of carbide-containing Ni alloys, the first metal member 12 and the second metal member 14 may be formed of the same carbide-containing Ni alloy, or the first metal member 12 and the second metal member 14 may be formed of different carbide-containing Ni alloys. For example, when the first metal member 12 is formed of a Haynes 230 alloy, the second metal member 14 may be formed of a Haynes 230 alloy, or the second metal member 14 may be formed of a carbide-containing Ni alloy different from the Haynes 230 alloy.

The insert material 16 is provided so as to be put between the first metal member 12 and the second metal member 14. More specifically, the insert material 16 is inserted between the bonding surface of the first metal member 12 and the bonding surface of the second metal member 14.

The insert material 16 contains Ni having a content higher than an Ni content of the first metal member 12 and the second metal member 14 when the first metal member 12 and the second metal member 14 are formed of the carbide-containing Ni alloys.

Since the insert material 16 contains Ni having a content higher than the content of Ni in the first metal member 12 and the second metal member 14, carbides at the bonding interface of the first metal member 12 and the second metal member 14 and in the vicinity thereof can be solid-solved in the insert material 16 during solid phase diffusion bonding. This makes it possible to suppress the presence of carbides along the bonding interface between the first metal member 12 and the second metal member 14. As described above, the insert material 16 is formed so that carbides at the bonding interface and in the vicinity thereof can be dissolved during solid phase diffusion bonding.

More specifically, the presence of carbides along the bonding interface of the first metal member 12 and the second metal member 14 can result in a situation where there will be cracks or a propagation path of the cracks. In addition, the presence of carbides along the bonding interface can result in a situation where the carbides act as a diffusion barrier and inhibit mutual solid phase diffusion, which may reduce the bonding strength. According to the insert material 16, by solid-solving the carbides during solid phase diffusion bonding, it is possible to suppress the presence of carbides along the bonding interface of the first metal member 12 and the second metal member 14. This makes it possible to promote solid phase diffusion and suppress the occurrence of cracks.

When the first metal member 12 and the second metal member 14 are formed of carbide-containing Ni alloys, the insert material 16 may be formed of an Ni alloy containing Ni having a content higher than the Ni content of the first metal member 12 and the second metal member 14, and, according to the invention, the insert material is formed of pure Ni. Pure Ni having a purity of 99% or more is used.

When the insert material 16 is formed of pure Ni, the insert material 16 becomes softer and more easily plastically deformed than when the insert material 16 is formed of an Ni alloy or an Fe alloy. For this reason, the insert material 16 can be brought into close contact with the bonding surfaces of the first metal member 12 and the second metal member 14 during solid phase diffusion bonding.

The insert material 16 can be formed of a sheet, foil, or the like. The insert material 16, according to the invention, is formed of a pure Ni foil. The thickness of the insert material 16 can be 20 µm or less. This is because if the thickness of the insert material 16 is larger than 20 µm, it may take a long time for solid phase diffusion. The thickness of the insert material 16 may be 5 µm or more and 10 µm or less.

For the first metal member 12, the second metal member 14, and the insert material 16, the surface roughness may be adjusted, and pretreatment such as degreasing cleaning may be performed before stacking.

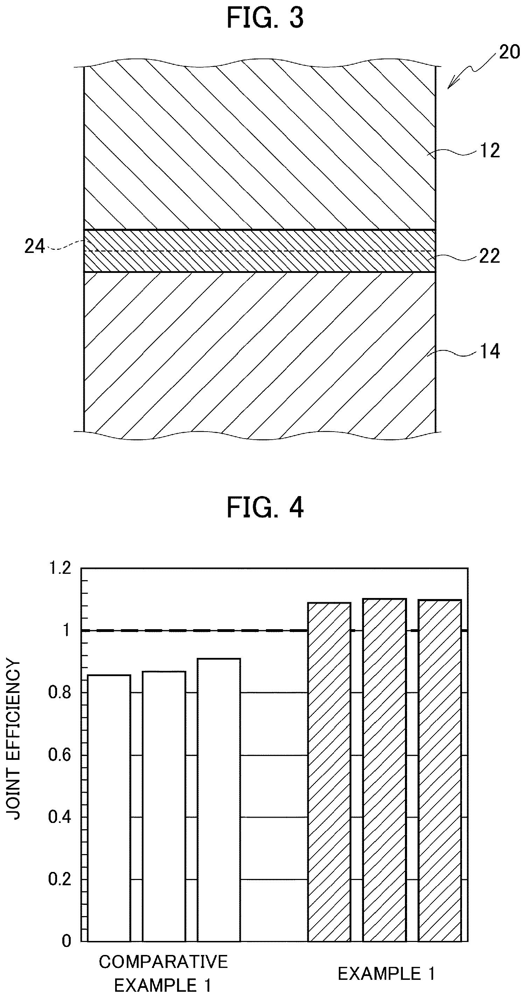

The solid phase diffusion bonding step (S12) is a step of forming a metal member joint body by heating and pressurizing a stacked body 10 to perform solid phase diffusion bonding. Fig. 3 is a diagram showing the configuration of the metal member joint body 20. By heating and pressurizing the stacked body 10 to perform solid phase diffusion bonding, a bonding portion 22 being a diffusion layer is formed between the first metal member 12 and the second metal member 14. The thickness of the bonding portion 22 can be, for example, 10 µm to 100 µm.

More specifically, by heating and pressurizing the stacked body 10, metal elements are mutually solid phase diffused between the first metal member 12, the second metal member 14, and the insert material 16, and thereby a bonding portion 22 being a diffusion layer is formed. The bonding portion 22 is formed of pure Ni and therefore has a Ni content higher than the content of Ni of the first metal member 12 and the second metal member 14.

During solid phase diffusion bonding, since the carbides at the bonding interface 24 of the first metal member 12 and the second metal member 14 and in the vicinity thereof are solid-solved in the insert material 16, the bonding interface 24 of the first metal member 12 and the second metal member 14 has no carbides precipitated therein. This suppresses the presence of carbides along the bonding interface 24 of the first metal member 12 and the second metal member 14, making it possible to prevent a situation where the bonding interface 24 serves as a crack propagation path. As a result, it is possible to improve the bonding strength of the bonding portion 22.

The bonding conditions (bonding temperature, bonding pressure, bonding time, and bonding atmosphere) when the first metal member 12 and the second metal member 14 are carbide-containing Ni alloys will be described. The bonding temperature is 1050°C or higher and 1200°C or lower. This is because if the bonding temperature is lower than 1050°C, it may be impossible to sufficiently solid-solve the carbides in the bonding interface 24 of the first metal member 12 and the second metal member 14 and in the vicinity thereof, which may result in insufficient solid phase diffusion and a decrease in bonding strength. This is also because if the bonding temperature is higher than 1200°C, the growth of crystal grains becomes rapid, which may decrease the mechanical strength. The bonding temperature may be 1050°C or higher and 1150°C or lower.

The bonding pressure is 5 MPa or more and 20 MPa or less. This is because if the bonding pressure is less than 5 MPa, the adhesion between the first metal member 12, the second metal member 14, and the insert material 16 may decrease, which may result in insufficient solid phase diffusion. This is also because if the bonding pressure is more than 20 MPa, the first metal member 12 and the second metal member 14 may be deformed or the like. The bonding pressure may be 5 MPa or more and 10 MPa or less.

The bonding time is 4 hours or longer and 10 hours or shorter. This is because if the bonding time is shorter than 4 hours, the solid phase diffusion at the bonding interface 24 of the first metal member 12 and the second metal member 14 and in the vicinity thereof may be insufficient, which may result in a decrease in bonding strength. The reason why the bonding time is 10 hours or shorter is that if the bonding time is 10 hours, the carbides at the bonding interface 24 and in the vicinity thereof can be sufficiently dissolved to enable solid phase diffusion bonding. In addition, if the bonding time is longer than 10 hours, the productivity decreases.

The bonding atmosphere is non-oxidizing atmosphere, and more specifically a vacuum atmosphere or an inert gas atmosphere such as argon gas or the like. This suppresses oxidation of the bonding surfaces of the first metal member 12, the second metal member 14, and the insert material 16, making it possible to promote solid phase diffusion. In the case of a vacuum atmosphere, it may be 1.3 × 10⁻² Pa or less.

The solid phase diffusion bonding step (S12) is followed by a heat treatment step in which the metal member joint body 20 is heat-treated to grow crystal grains of a bonding portion 22 between the first metal member 12 and the second metal member 14 across a bonding interface 24 of the bonding portion 22. The creep characteristics of the metal member joint body 20 can be improved by growing the crystal grains of the bonding portion 22 across the bonding interface 24. In addition, by heat-treating the metal member joint body 20, the composition of the bonding portion 22 can be made more uniform.

The heat treatment conditions (heat treatment temperature, heat treatment time, and heat treatment atmosphere) when the first metal member 12 and the second metal member 14 are carbide-containing Ni alloys will be described. The heat treatment temperature is 1050°C or higher and 1200°C or lower. This is because when the heat treatment temperature is lower than 1050°C, the crystal grains of the bonding portion 22 may hardly grow. This is also because if the heat treatment temperature is higher than 1200°C, the growth of crystal grains of the first metal member 12 and the second metal member 14 becomes rapid, which may decrease the mechanical strength. The heat treatment temperature may be 1050°C or higher and 1150°C or lower.

The heat treatment time is 5 hours or longer and 75 hours or shorter. This is because if the heat treatment time is shorter than 5 hours, the growth of crystal grains of the bonding portion 22 may be insufficient. The reason why the heat treatment time is 75 hours or shorter is that if the heat treatment time is 75 hours, it is a sufficient time for the crystal grains of the bonding portion 22 to grow across the bonding interface 24. The heat treatment time may be 50 hours or longer and 75 hours or shorter.

The heat treatment atmosphere is a non-oxidizing atmosphere, and more specifically a vacuum atmosphere or an inert gas atmosphere such as argon gas or the like. This suppresses oxidation of the metal member joint body 20 during the heat treatment. The heat treatment atmosphere may be the same as the bonding atmosphere.

For the solid phase diffusion bonding of the stacked body 10, a general diffusion bonding equipment can be used, such as a vacuum diffusion bonding equipment, a vacuum hot press equipment, or a hot isotropic pressing (HIP) equipment. In addition, for the heat treatment of the metal member joint body 20, it is possible to use a general heat treatment equipment for a metal material.

Next, the configuration of the metal member joint body 20 bonded by the above metal member bonding method will be described. A metal member joint body 20 includes a first metal member 12 and a second metal member 14 formed of carbide-containing Ni alloys, and a bonding portion 22 provided between the first metal member 12 and the second metal member 14 and formed of a diffusion layer. Additionally, the bonding interface 24 of the bonding portion 22 has no carbides precipitated therein.

More specifically, the bonding portion 22 is formed of a diffusion layer in which the metal elements of the first metal member 12, the second metal member 14, and the insert material 16 are mutually solid phase diffused. Carbides are dissolved at the bonding interface 24 of the bonding portion 22 and in the vicinity thereof. For this reason, the bonding interface 24 of the bonding portion 22 has no carbides precipitated therein. This suppresses the formation of a diffusion barrier due to the presence of carbides along the bonding interface 24, making it possible to promote solid phase diffusion and increase the bonding strength of the bonding portion 22. In addition, since carbides are solid-solved at the bonding interface 24 of the bonding portion 22 and in the vicinity thereof, the formation of a crack propagation path due to the presence of carbides along the bonding interface 24 is suppressed. This makes it possible to suppress the formation and propagation of cracks at the bonding portion 22. As a result, the tensile characteristics and the like of the metal member joint body 20 can be improved.

In addition, in the metal member joint body 20 heat-treated after solid phase diffusion bonding, the crystal grains of the bonding portion 22 are across the bonding interface 24 of the bonding portion 22. More specifically, by heat-treating the metal member joint body 20 after solid phase diffusion bonding, the crystal grains of the bonding portion 22 grow across the bonding interface 24. At the bonding interface 24, creep deformation due to slip or the like is likely to occur as in the case of crystal grain boundaries. However, since the crystal grains of the bonding portion 22 grow across the bonding interface 24, creep deformation can be suppressed. This makes it possible to improve the creep characteristics and the like of the metal member joint body 20.

As described above, the metal member joint body 20 is excellent in mechanical strength such as tensile characteristics and creep characteristics. Therefore, it can be applied to turbine blades of aircraft and industrial gas turbines and the like. In addition, since the metal member joint body 20 is excellent in sealing properties for reaction gas and the like as well as in mechanical strength, it can be applied to heat exchangers, reactors, and the like in chemical plants.

As mentioned above, the above configuration includes a stacked body forming step of forming a stacked body by putting an insert material between a first metal member and a second metal member formed of carbide-containing Ni alloys, and a solid phase diffusion bonding step of forming a metal member joint body by heating and pressurizing the stacked body to perform solid phase diffusion bonding, wherein the insert material contains Ni having a content higher than an Ni content of the first metal member and the second metal member when the first metal member and the second metal member are formed of the carbide-containing Ni alloys. This suppresses the presence of carbides along the bonding interface of the bonding portion between the first metal member and the second metal member, making it possible to suppress the formation of a crack propagation path and promote solid phase diffusion. As a result, it is possible to improve mechanical strength such as tensile characteristics in the metal member joint body.

The above configuration further includes a heat treatment step in which the metal member joint body is heat-treated to grow crystal grains of a bonding portion between the first metal member and the second metal member across a bonding interface of the bonding portion. This allows the crystal grains of the bonding portion to be across the bonding interface of the bonding portion, making it possible to improve mechanical strength such as creep characteristics. Examples

The mechanical strength characteristics of the Ni alloy member were evaluated by performing solid phase diffusion bonding.

### (Preparation of Specimen)

First, the specimen of Example 1 is described. As the Ni alloy member, Haynes 230 alloy was used, which is a solid solution strengthened heat-resistant Ni-based alloy. The Haynes 230 alloy is a carbide-containing Ni alloy containing carbides such as Cr carbides and W carbides. As the Haynes 230 alloy, the one having the above-mentioned alloy composition was used. The shape of the Ni alloy member was a block shape. Pure Ni foil was used as the insert material. As the pure Ni foil, a foil having a purity of 99% or more was used. The thickness of the insert material was 5 µm to 10 µm. A stacked body was formed by putting an insert material between an Ni alloy member and an Ni alloy member formed of Haynes 230 alloys.

Next, the stacked body was heated and pressurized in a vacuum atmosphere to perform solid phase diffusion bonding. A vacuum diffusion bonding equipment was used for solid phase diffusion bonding. The bonding temperature was 1050°C to 1150°C. The bonding pressure was 5 MPa to 10 MPa. The bonding time was 4 to 10 hours. The degree of vacuum was 1.3 × 10⁻² Pa or less.

The specimen of Example 2 is described. The specimen of Example 2 is different from the specimen of Example 1 in that heat treatment is performed after solid phase diffusion bonding. More specifically, in the specimen of Example 2, first, a stacked body was formed and solid phase diffusion bonding was performed in the same manner as in the specimen of Example 1. Then, in the specimen of Example 2, the metal member joint body subjected to solid phase diffusion bonding was heat-treated. A heat treatment furnace was used for the heat treatment of the metal member joint body. The heat treatment was performed by heating from 1050°C to 1150°C in a vacuum atmosphere. The heat treatment time was 50 hours. The degree of vacuum was 1.3 × 10⁻² Pa or less.

The specimen of Example 3 is described. The specimen of Example 3 is different from the specimen of Example 1 in that heat treatment is performed after solid phase diffusion bonding. In addition, the specimen of Example 3 is different from the specimen of Example 2 in that the heat treatment time is longer. More specifically, in the specimen of Example 3, a stacked body was formed and solid phase diffusion bonding was performed in the same manner as in the specimen of Examples 1 and 2. Then, in the specimen of Example 3, the metal member joint body subjected to solid phase diffusion bonding was heat-treated. The heat treatment was performed by heating from 1050°C to 1150°C in a vacuum atmosphere. The heat treatment time was 72 hours. The degree of vacuum was 1.3 × 10⁻² Pa or less.

The specimen of Comparative Example 1 is described. The specimen of Comparative Example 1 is different from the specimen of Example 1 in that solid phase diffusion bonding was performed without using an insert material. More specifically, in the specimen of Comparative Example 1, the bonding surfaces of the Ni alloy members were directly abutted with each other, followed by solid phase diffusion bonding. The bonding conditions (such as bonding temperature, bonding pressure, bonding time, and bonding atmosphere) of the specimen of Comparative Example 1 were the same as those of the specimen of Example 1.

The specimen of Comparative Example 2 is described. The specimen of Comparative Example 2 is different from the specimen of Comparative Example 1 in that heat treatment is performed after solid phase diffusion bonding. More specifically, the specimen of Comparative Example 2 was formed by performing solid phase diffusion bonding without using an insert material as in the specimen of Comparative Example 1, and then heat-treating. The heat treatment conditions of the specimen of Comparative Example 2 were the same as the heat treatment conditions of the specimen of Example 2 (such as heat treatment temperature, heat treatment time, and heat treatment atmosphere).

### (Tensile Test)

The specimens of Example 1 and Comparative Example 1 were subjected to a tensile test at room temperature. The tensile test was performed in accordance with ASTM E8/E8M. The tensile test piece was prepared by cutting out from each specimen. The number of test pieces was 3 for each specimen. Fig. 4 is a graph showing the results of tensile tests on the specimens. In the graph of Fig. 4, the horizontal axis represents each specimen, the vertical axis represents the joint efficiency, and the joint efficiency of each specimen is represented by a bar graph. Note that the joint efficiency is a value when the standard value (760 MPa) of the room temperature tensile strength of the Haynes 230 alloy as the base material is set to 1.

In the specimen of Comparative Example 1, the joint efficiency was smaller than 1, and the tensile strength lower than the base material strength was obtained. In the specimen of Comparative Example 1, all of the test pieces were broken at the bonding portion. On the other hand, in the specimen of Example 1, the joint efficiency was higher than 1, and the tensile strength equivalent to the base material strength was obtained. In the specimen of Example 1, all of the test pieces were broken not at the bonding portion but at the base material. From these results, it has been found that the tensile characteristics are improved by solid phase diffusion bonding using pure Ni foil as an insert material.

### (Creep Test)

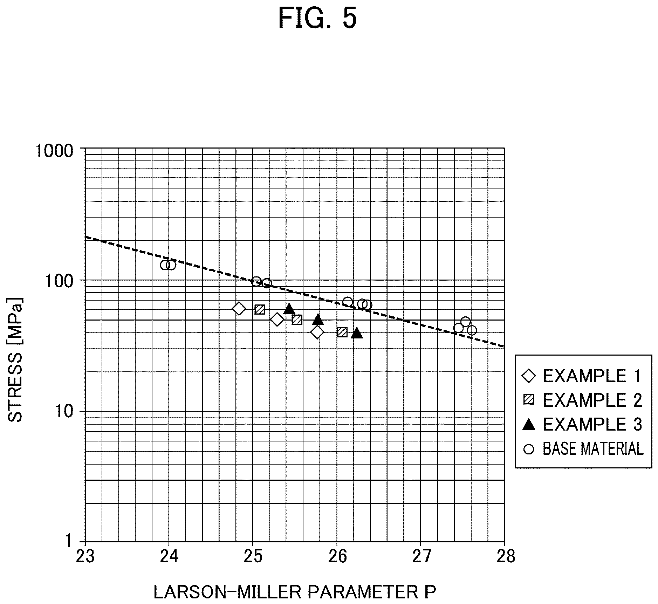

Creep tests were performed on the specimens of Examples 1 to 3. The creep tests were performed in accordance with JIS Z 2271. Creep test pieces were prepared by cutting out from each specimen. The number of test pieces was 3 for each specimen. Fig. 5 is a graph showing the results of creep tests on the specimens. In the graph of Fig. 5, the horizontal axis is the Larson-Miller parameter P, the vertical axis is the stress, the specimen of Example 1 is indicated as a rhombus, the specimen of Example 2 as a square, the specimen of Example 3 as a triangle, and the base material as a circle. The Larson mirror parameter P is a parameter represented by P = T(C + log tᵣ). T is the absolute temperature (K), tᵣ is the stress rupture time (h), and C is the material constant. Note that the material constant C was set to 20.

The specimens of Examples 2 and 3 were improved in creep characteristics as compared with the specimen of Example 1. From these results, it has been found that the creep characteristics are improved by performing the heat treatment after the solid phase diffusion bonding. In addition, the specimen of Example 3 was improved in creep characteristics as compared with the specimen of Example 2. From these results, it has been found that the creep characteristics are improved by increasing the heat treatment time after the solid phase diffusion bonding.

### (Observation of Metal Structure)

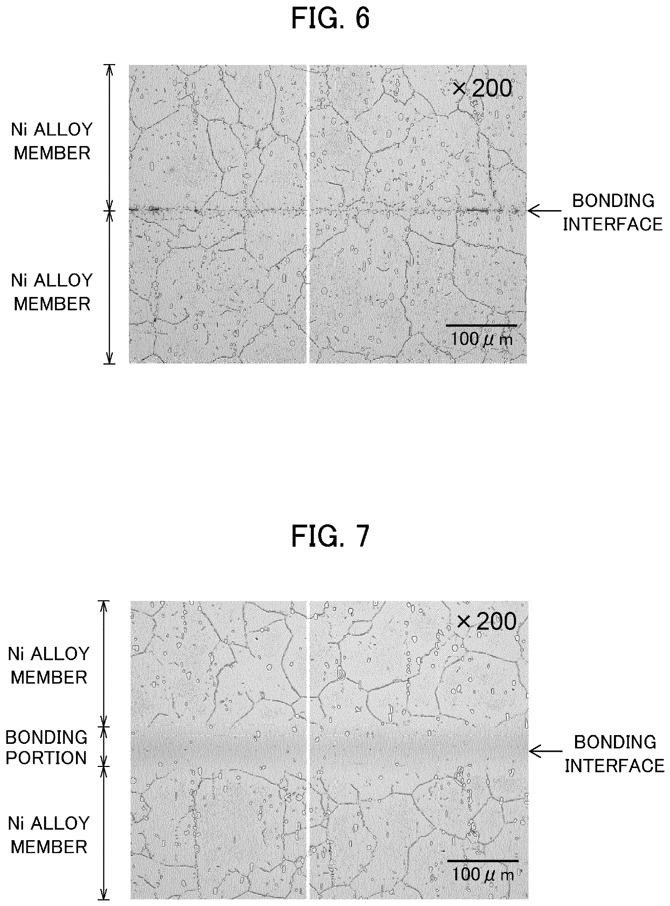

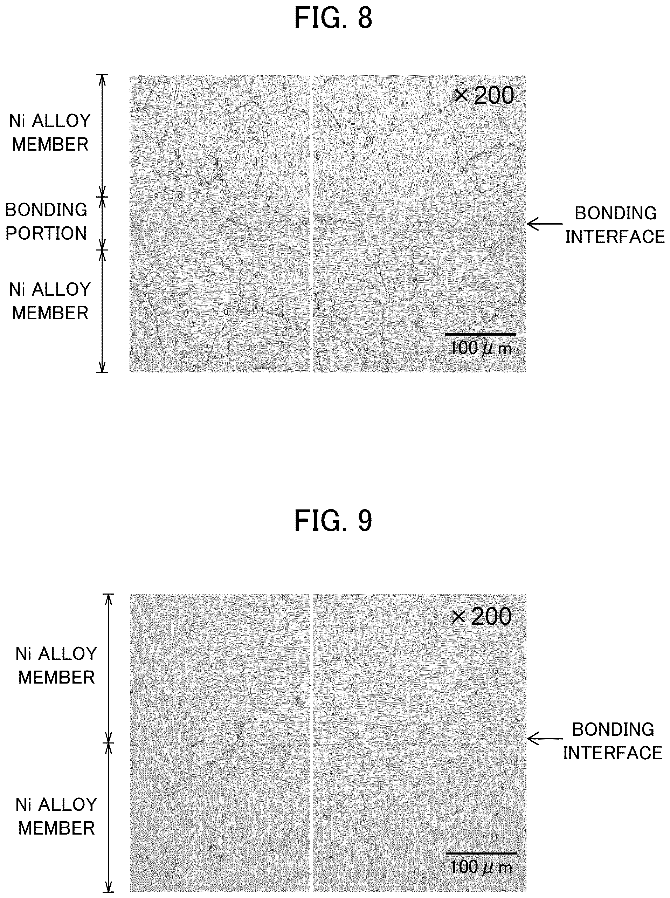

The metal structure of the specimens of Examples 1 and 2 and the specimens of Comparative Examples 1 and 2 was observed with an optical microscope. Fig. 6 is a photograph showing the metal structure observation results of the specimen of Comparative Example 1. Fig. 7 is a photograph showing the metal structure observation results of the specimen of Example 1. Fig. 8 is a photograph showing the metal structure observation results of the specimen of Example 2. Fig. 9 is a photograph showing the metal structure observation results of the specimen of Comparative Example 2. Note that the magnification of metal structure observation was 200 times.

As shown in Fig. 6, in the specimen of Comparative Example 1, it was confirmed that carbides were present along the bonding interface between the Ni alloy members. Formed at the bonding interface was a layer in which carbides were densely formed. As described above, it has been found that carbides are present along the bonding interface after performing solid phase diffusion bonding without using an insert material. As a result, it is considered that the tensile strength of the specimen of Comparative Example 1 was reduced.

As shown in Fig. 7, in the specimen of Example 1, a bonding portion being a diffusion layer was formed between the Ni alloy members. In the specimen of Example 1, no carbide was found at the bonding interface of the bonding portion. From these results, since the carbides are not precipitated at the bonding interface due to the solid dissolution of the carbides at the bonding interface and in the vicinity thereof, it is possible to prevent the bonding interface from becoming a crack propagation path. As a result, it is considered that the tensile strength of the specimen of Example 1 was improved.

As shown in Fig. 8, in the specimen of Example 2, the crystal grains of the bonding portion grew across the bonding interface of the bonding portion. On the other hand, as shown in Fig. 7, in the specimen of Example 1, the crystal grains of the bonding portion did not grow across the bonding interface. From this result, it has been found that, by heat treatment after solid phase diffusion bonding, the crystal grains of the bonding portion grow across the bonding interface, so that the creep characteristics are improved.

As shown in Fig. 9, in the specimen of Comparative Example 2, the crystal grains at the bonding interface and in the vicinity thereof did not grow across the bonding interface. From this result, it has been found that, in the case of performing solid phase diffusion bonding without using an insert material, the crystal grains at the bonding interface and in the vicinity thereof hardly grow even in the case of performing heat treatment after solid phase diffusion bonding.

### [Industrial Applicability]

The present invention can improve the mechanical strength of a metal member joint body, and thus can be applied to turbine blades of aircraft and industrial gas turbines and the like as well as to heat exchangers, reactors, and the like in chemical plants.

## Claims

1. A method of bonding metal members to obtain a metal member joint body, comprising:
a stacked body forming step of forming a stacked body by putting an insert material between a first metal member and a second metal member formed of carbide-containing Ni alloys; and
a solid phase diffusion bonding step of forming a metal member joint body by heating and pressurizing the stacked body under a vacuum atmosphere or an inert gas atmosphere at 5 MPa or more and 20 MPa or less for 4 hours or longer and 10 hours or shorter to perform solid phase diffusion bonding, wherein
the insert material is formed of pure Ni having a purity of 99% or more;
the method further comprising a heat treatment step in which the metal member joint body is heat-treated to grow crystal grains of a bonding portion between the first metal member and the second metal member across a bonding interface of the bonding portion; and
in the heat treatment, a heat treatment temperature is 1050°C or higher and 1200°C or lower, a heat treatment time is 5 hours or longer and 75 hours or shorter, and a heat atmosphere is a vacuum atmosphere or an inert gas atmosphere.

## Patentansprüche

1. Verfahren zum Verbinden von Metallteilen, um einen Verbundkörper aus Metallteilen zu erhalten, umfassend:
einen Schritt zum Bilden eines Stapelkörpers, bei dem ein Stapelkörper gebildet wird, indem ein Einlagematerial zwischen einem ersten Metallteil und einem zweiten Metallteil angeordnet wird, die aus nickelhaltigen Legierungen mit Karbidgehalt gebildet sind; und
einen Schritt zum Durchführen einer Festphasendiffusionsverbindung, bei dem ein Verbundkörper aus Metallteilen gebildet wird, indem der Stapelkörper unter einer Vakuumatmosphäre oder einer Inertgasatmosphäre bei einem Druck von 5 MPa oder mehr und 20 MPa oder weniger für eine Zeitdauer von 4 Stunden oder länger und 10 Stunden oder kürzer erwärmt und unter Druck gesetzt wird, um eine Festphasendiffusionsverbindung durchzuführen, wobei
das Einlagematerial aus reinem Ni mit einem Reinheitsgrad von 99 % oder mehr besteht;
das Verfahren weiter einen Schritt zum Wärmebehandeln umfasst, bei dem der Verbundkörper aus Metallteilen wärmebehandelt wird, um die Kristallkörner eines Verbindungsbereichs zwischen dem ersten Metallteil und dem zweiten Metallteil über eine Verbindungsgrenzfläche des Verbindungsbereichs hinweg anwachsen zu lassen; und
bei der Wärmebehandlung eine Behandlungstemperatur 1050 °C oder höher und 1200 °C oder niedriger ist, eine Behandlungsdauer 5 Stunden oder länger und 75 Stunden oder kürzer ist, und die Prozessatmosphäre eine Vakuumatmosphäre oder eine Inertgasatmosphäre ist.

## Revendications

1. Procédé de liaison d'éléments métalliques pour obtenir un corps de jonction d'éléments métalliques, comprenant :
une étape de formation d'un corps empilé consistant à former un corps empilé en insérant un matériau entre un premier élément métallique et un second élément métallique formé d'alliages de Ni contenant du carbure ; et
une étape de liaison par diffusion en phase solide consistant à former un corps de jonction d'éléments métalliques en chauffant et en pressurisant le corps empilé sous une atmosphère sous vide ou sous une atmosphère de gaz inerte à une pression supérieure ou égale à 5 MPa et inférieure ou égale à 20 MPa pendant 4 heures ou plus et 10 heures ou moins pour réaliser une liaison par diffusion en phase solide, dans lequel
le matériau d'insertion est composé de Ni pur présentant une pureté supérieure ou égale à 99 % ;
le procédé comprenant en outre une étape de traitement thermique au cours de laquelle le corps de jonction d'éléments métalliques est traité thermiquement pour faire croître des grains cristallins d'une partie de liaison située entre le premier élément métallique et le second élément métallique à travers une interface de liaison de la partie de liaison ; et
lors du traitement thermique, une température de traitement thermique est supérieure ou égale à 1050 °C et inférieure ou égale à 1200 °C, une durée de traitement thermique est supérieure ou égale à 5 heures et inférieure ou égale à 75 heures, et l'atmosphère thermique est une atmosphère sous vide ou une atmosphère de gaz inerte.
